# EUROPEAN PATENT SPECIFICATION

(11) **EP 2 979 898 B1**
(45) Date of publication and mention of the grant of the patent: **18.10.2017**
(21) Application number: 14774573.1
(22) Date of filing: 14.03.2014
(51) Int. Cl.: B60C 1/00, B60C 5/01, B60C 9/14, B60C 9/22, C08G 69/40

(54) **TIRE**
REIFEN
PNEUMATIQUE

(30) Priority: 29.03.2013 JP 2013074647
(43) Date of publication of application: 03.02.2016
(73) Proprietor: Bridgestone Corporation, Tokyo 104-8340 (JP)
(72) Inventor: FUDEMOTO, Hiroyuki, Tokyo 104-8340 (JP); TARUTANI, Yasunori, Tokyo 104-8340 (JP); ITOH, Yuki, Tokyo 104-8340 (JP)
(74) Representative: Oxley, Robin John George
(86) International application number: PCT/JP2014/056997
(87) International publication number: WO 2014/156741

(56) References cited:
- EP-A1- 2 610 072
- EP-A1- 2 676 809
- EP-A1- 2 821 250
- JP-A- H07 149 108
- JP-A- 2001 004 301
- JP-A- 2012 066 809

## Description

### Technical Field

The present invention relates to a tire that is to be fitted on a rim, and particularly, to a tire in which at least a portion thereof is formed of a resin material.

### Background Art

Conventionally, in vehicles such as passenger cars, pneumatic tires constructed from rubber, organic fiber materials, steel members, and the like have been used. General rubber materials conventionally used for pneumatic tires are not problematic with respect to, for example, heat resistance. However, multiple steps, for example, kneading, seating, molding, and vulcanization are usually performed in a tire manufacturing process, and productivity improvement has been demanded.

In order to meet the demand, in recent years, from the viewpoints of weight reduction, ease of molding, and ease in recycling, investigations have been conducted on the use of resin materials, particularly thermoplastic resins, thermoplastic elastomers and the like as the tire materials. For example, Japanese Patent publications such as Japanese Patent Application Laid-Open (JP-A) No.2003-104008 disclose pneumatic tires molded using thermoplastic polymer materials. These thermoplastic polymer materials (thermoplastic resins) have many advantages from the viewpoint of productivity improvement, such as injection-molding capability.

In addition, a tire is proposed which uses a polyamide-based thermoplastic elastomer as a thermoplastic polymer material (See, for example, JP-A No. 2012-46030 and European Patent Application No. 1482011). EP2610072 and EP2676809 disclose tires.

### SUMMARY OF INVENTION

### Technical Problem

Tires using thermoplastic polymer materials can be easily produced at lower cost as compared with conventional tires formed from rubber. However, when the tire frame is formed from a hygroscopic thermoplastic polymer material such as a polyamide, there is room for improvement from the viewpoint of, for example, corrosion of metallic members embedded in the tire as compared with conventional tires formed from rubber.

In view of the circumstances descrived above, an object of the present invention is to provide a tire which is formed by using a resin material and has excellent rust preventability for a reinforcing metallic cord.

### Solution to Problem

A tire which has a circular tire frame formed of a resin material, and a reinforcing metallic cord member wound around an outer circumferential portion of the tire frame, in which the resin material comprises a polyamide-based thermoplastic elastomer including a soft segment and a hard segment including a structural unit represented by -[CO-(CH₂)ₘ-NH]-(wherein m represents an integer of 6 to 10) in a molecule is provided.

### Effect of the Invention

According to the present invention, a tire which is made of a resin material and has excellent rust preventability for a reinforcing metallic cord member can be provided.

### BRIEF DESCRIPTION OF THE DRAWINGS

FIG. 1A is a perspective view illustrating a cross-section of a part of a tire according to one embodiment of the invention.
FIG. 1B is a cross-sectional view illustrating a bead portion mounted on a rim.
FIG. 2 is a cross-sectional view taken along a tire rotation axis, which illustrates a state where a reinforcing metallic cord is embedded in a crown portion of a tire case of the tire according to the embodiment
FIG. 3 is a diagram illustrating an operation of embedding the reinforcing metallic cord in the crown portion of the tire case by the use of a cord heating apparatus and rollers.

### DESCRIPTION OF EMBODIMENTS

The tire of the invention has a circular tire frame that is formed of a resin material, in which the resin material includes a polyamide-based thermoplastic elastomer including a soft segment and a hard segment including a structural unit represented by -[CO-(CH₂)ₘ-NH]-(wherein m represents an integer of 6 to 10) in a molecule.

The tire of the invention has excellent rust preventability for a reinforcing metallic cord member embedded therein because the tire frame in the invention is configured by including a polyamide-based thermoplastic elastomer including a soft segment and a hard segment including a structural unit represented by -[CO-(CH₂)ₘ-NH]- (wherein m represents an integer of 6 to 10) in a molecule. Further, the tire of the invention has excellent productivity because the tire frame can be made by injection-molding.

### <<Resin Material>>

As described above, the tire has a tire frame formed by using a resin material. The resin material includes at least a polyamide-based thermoplastic elastomer including a soft segment and a hard segment including a structural unit represented by -[CO-(CH₂)ₘ-NH]-(wherein m represents an integer from 6 to 10) in a molecule.

Although the resin material may include a thermoplastic elastomer other than the polyamide-based thermoplastic elastomer and an arbitrary component, the content of the polyamide-based thermoplastic elastomer including a soft segment and a hard segment including a structural unit represented by -[CO-(CH₂)ₘ-NH]- (wherein m represents an integer of 6 to 10) in a molecule is preferably 30 mass% or more, more preferably 50 mass% or more, and in particular, preferably 70 mass % or more. The term "resin" in the present specification is a concept which includes thermoplastic resins and thermohardening resins, but does not include natural rubber.

### (Polyamide-based Thermoplastic Elastomer)

In the invention, the term "polyamide-based thermoplastic elastomer" means a thermoplastic resin material consisting of a copolymer including a polymer which forms a crystalline hard segment having a high melting point and a polymer which forms a non-crystalline soft segment having a low glass transition temperature, which resin material has an amide bond (-CONH-) on the backbone of the polymer which forms the hard segment.

### (Polyamide-based Thermoplastic Elastomer)

In the invention, the "polyamide-based thermoplastic elastomer" means a thermoplastic resin material which is formed of a copolymer including a polymer constituting a hard segment that is crystalline and has a high melting point, and a polymer constituting a soft segment that is non-crystalline and has a low glass transition temperature, and which has an amide bond (-CONH-) in the main chain of the polymer constituting the hard segment.

The polyamide-based thermoplastic elastomer may be referred to simply as "TPA" (Thermo Plastic Amid elastomer).

The polyamide-based thermoplastic elastomer may be a material in which at least a polyamide constitutes a crystalline hard segment having a high melting point and another polymer (for example, a polyester or a polyether) constitutes a non-crystalline soft material having a low glass transition temperature. Further, in the polyamide-based thermoplastic elastomer, a chain extending agent such as a dicarboxylic acid may be used in addition to the hard segment and the soft segment. Examples of the polyamide for forming the hard segment include a polyamide produced using a monomer represented by the following Formula (1) or (2).

### - Hard Segment -

In the invention, the hard segment has a structural unit represented by -[CO-(CH₂)ₘ-NH]- (wherein m represents an integer of 6 to 10).

In the structural unit represented by -[CO-(CH₂)ₘ-NH]-, m affects a hygroscopicity and a stiffness of the resin material from which a tire is made, and when m is less than 6, the hygroscopicity of the resin material is high, and the rust preventability of a reinforcing metallic cord member in the tire is insufficient. When m in the structural unit represented by -[CO-(CH₂)ₘ-NH]- exceeds 10, synthesis becomes difficult.

m in the structural unit represented by -[CO-(CH₂)ₘ-NH]- is preferably 7 or more, more preferably 8 or more, and particularly preferably 9 or more.

However, from the viewpoint of a melting point of the resin, m in the structural unit represented by -[CO-(CH₂)ₘ-NH]- is 10 or less. When m is 10 or less, the number of hydrogen bonds increases, as a result of which a melting point becomes highter, and heat resistance is excellent.

Examples of the polyamide having a structural unit represented by -[CO-(CH₂)ₘ-NH]- include a polyamide obtained by a ring-opening polycondensation of undecanlactam (polyamide 11).

For the polyamide 7, m is 6, and as the number of repetition of the structural unit represented by -[CO-(CH₂)ₘ-NH]-, from 2 to 100 is preferable, and from 3 to 50 is more preferable.

For the polyamide 8, m is 7, and preferably from 2 to 100, and more preferably from 3 to 50 as the number of repetition of the structural unit represented by -[CO-(CH₂)ₘ-NH]-.

For the polyamide 11, m is 10, and preferably from 2 to 100, and more preferably from 3 to 50 as the number of repetition of the structural unit represented by -[CO-(CH₂)ₘ-NH]-.

By way of reference, for the polyamide 12, m is 11, and preferably from 2 to 100, and more preferably from 3 to 50 as the number of repetition of the structural unit represented by -[CO-(CH₂)ₘ-NH]-.

In the invention, the resin material may further include a polyamide-based thermoplastic elastomer other than the polyamide-based thermoplastic elastomer including a soft segment and a hard segment including a structural unit represented by -[CO-(CH₂)ₘ-NH]-(wherein m represents an integer from 6 to 10) in a molecule (hereinafter, also referred to as another polyamide-based thermoplastic elastomer).

Examples of polyamide which forms another polyamide-based thermoplastic elastomer may include, for example, a polyamide represented by the Formula (1) or Formula (2).

Formula (1) H₂N-R¹-COOH

In Formula (1), R¹ represents a hydrocarbon molecular chain having 2 to 5 carbon atoms or having 12 to 20 carbon atoms, or an alkylene group having 2 to 5 carbon atoms or having 12 to 20 carbon atoms.

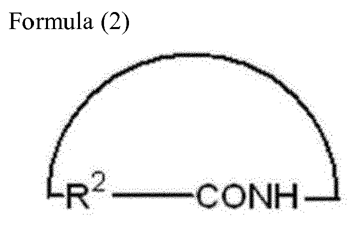

In Formula (2), R² represents a hydrocarbon molecular chain having 3 to 5 carbon atoms or having 12 to 20 carbon atoms, or an alkylene group having 3 to 5 carbon atoms or having 12 to 20 carbon atoms.

Examples of the monomer represented by Formula (1) or Formula (2) include an ω-aminocarboxylic acid and a lactam. Examples of the polyamide that forms the hard segment include a polycondensate of a ω-aminocarboxylic acid and a lactam, and a copolycondensate of a diamine with a dicarboxylic acid.

Examples of the ω-aminocarboxylic acids include aliphatic ω-aminocarboxylic acids having 3 to 5 carbon atoms or having 12 to 20 carbon atoms. Examples of the lactams include aliphatic lactams having 3 to 5 carbon atoms or having 12 to 20 carbon atoms.

Examples of the diamines include diamine compounds such as aliphatic diamines having 2 to 5 carbon atoms or having 12 to 20 carbon atoms. Further, the dicarboxylic acids may be represented by HOOC-(R³)m-COOH(R³: hydrocarbon molecular chain of having 3 to 20 carbon atoms, m: 0 or 1), and examples thereof include aliphatic dicarboxylic acids having 2 to 22 carbon atoms, such as oxalic acid, succinic acid, glutaric acid, adipic acid, pimelic acid, suberic acid, azelaic acid, sebacic acid, and dodecanedioic acid.

In addition, a polyamide such as a polyamide obtained by polycondensation of diamine with dibasic acid (polyamide 66), or a polyamide including meta-xylene diamine as a structural unit (amide MX) may be used in combination as a polyamide which forms the hard segment.

The polyamide 66 include a structural unit represented, for example, by - [CO(CH₂)₄CONH(CH₂)₆NH]-, the number of repetition of the structural unit represented by - [CO(CH₂)₄CONH(CH₂)₆NH]- is preferably from 2 to 100, and more preferably from 3 to 50.

The amide MX including meta-xylene diamine as a structural unit can be represented by the following structural unit (A-1) [in (A-1), n is an arbitrary number of the repeating unit], and n is, for example, preferably from 2 to 100, and more preferably form 3 to 50.

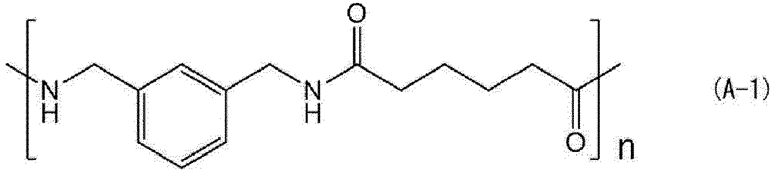

The polyamide-based thermoplastic elastomer has preferably a polyamide including a unit structure represented by -[CO-(CH₂)₁₁-NH]- (polyamide 12) as a hard segment. As described above, the polyamide 12 may be obtained by a ring-opening polycondensation of lauryl lactam or the polycondensation of 12-aminododecanoic acid.

### - Soft Segment -

A polymer that forms the soft segment may be, for example, a polyester or a polyether. Examples of the polyether include, for example, polyethylene glycol, polypropylene glycol, polytetramethylene ether glycol (PTMG), an ABA-type triblock polyether diol. These may be used singly or in combination of two or more kinds thereof. A polyether diamine obtained by allowing terminals of a polyether with ammonia or the like, for example, may also be used. For example, ABA-type triblock polyether diamines may be used.

Here, the "ABA-type triblock polyether diol" includes a polyether represented by the following Formula (3).

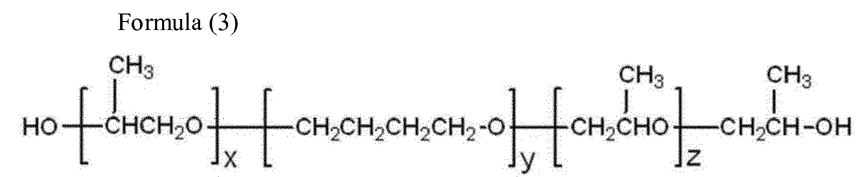

In Formula (3), x and z each independently represents an integer of 1 to 20. y represents an integer of 4 to 50.

In the general formula (3), x and z are each preferably an integer of 1 to 18, and more preferably an integer of 1 to 16, particularly preferably an integer of 1 to 14, and most preferably an integer of 1 to 12. In Formula (3), y is preferably an integer of 5 to 45, more preferably an integer of 6 to 40, particularly preferably an integer of 7 to 35, and most preferably n integer of 8 to 30.

Further, the "ABA-type triblock polyether diamine" includes a polyether diamine represented by the following Formula (N).

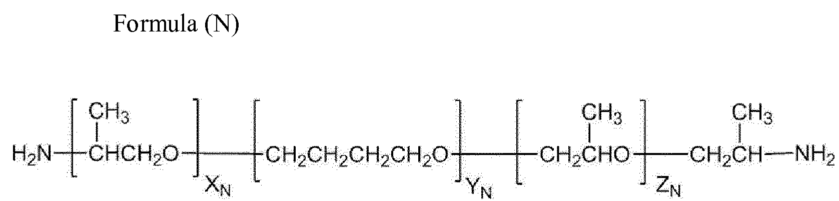

In Formula (N), X_{N} and Z_{N} each independently represent an integer of 1 to 20. Y_{N} represents an integer of 4 to 50.

In Formula (N), X_{N} and Z_{N} preferably are an integer of from 1 to 18, respectively, more preferably from 1 to 16, particularly preferably from 1 to 14, and most preferably from 1 to 12. In Formula (N), Y_{N} is preferably an integer of 5 to 45, more preferably from 6 to 40, particularly from 7 to 35, and most preferably 8 to 30.

The soft segment is preferably a polymer including a structural unit derived from tetramethylene ether glycol (TMG), and in particular, from a viewpoint of improvement of pressure resistance of a tire, preferably a copolymer including a structural unit derived from tetramethylene ether glycol (TMG). Other structural units which may form a copolymer with the structural unit derived from tetramethylene ether glycol (TMG) are not especially limited and include a structural unit derived from the above described ethylene glycol (EG), propyleneglycol (PPG), and the like.

Specifically, examples of the copolymer containing the structural unit derived from tetramethylene ether glycol (TMG) include a binary copolymer which includes, for example, a structural unit derived from TMG and a structural unit derived from PPG (for example, PTMG/PPG), a terpolymer (for example, PPG/PTMG/PPG, PTMG/PPG/PEG), and the like. Note that PPG/PTMG/PPG may represented by "PPG-PTMG-PPG".

The polymer which forms the soft segment may include, as a monomer unit, a diamine such as a branched saturated diamine having 6 to 22 carbon atoms, a branched alicyclic diamine having 6 to 16 carbon atoms, or a norbornandiamine. Further, the branched saturated diamine having 6 to 22 carbon atoms, the branched alicyclic diamine having 6 to 16 carbon atoms or the norbornanamine may be used singly, may be used in combination with each other, or may be used in combination with the ABA-type triblock polyether or the ABA-type triblock polyether diamine described above.

Examples of the combination of the hard segment and the soft segment may include combinations of any of the hard segments described above and any of the soft segments described above. Among these, a combination of a ring-opening polycondensate of lauryl lactam with polyethylene glycol, a combination of a ring-opening polycondensate of lauryl lactam with polypropylene glycol, a combination of a ring-opening polycondensate of lauryl lactam with poly tetramethylene ether glycol, a ring-opening polycondensate of lauryl lactam wiht an ABA-type triblock polyether, a combination of a ring-opening polycondensate of lauryl lactam with an ABA-type triblock polyether diamine, a combination of a polycondensate of aminododecanoic acid with polyethylene glycol, a combination of a polycondensate of aminododecanoic acid with polypropylene glycol, a combination of a polycondensate of aminododecanoic acid wiht poly tetramethylene ether glycol, a combination of a polycondensate of aminododecanoic acid with an ABA-type triblock polyether,a combination of a polycondensate of aminododecanoic acid with an ABA-type triblock polyether diamine are preferable, a combination of a ring-opening polycondensate of lauryl lactam with an ABA-type triblock polyether, a combination of a ring-opening polycondensate of lauryl lactam with an ABA-type triblock polyether diamine, a combination of a polycondensate of aminododecanoic acid with an ABA-type triblock polyether, a combination of a polycondensate of aminododecanoic acid with an ABA-type triblock polyether diamine are particularly preferable.

Examples of the branched saturated diamines having 6 to 22 carbon atoms include, for example, 2,2,4-trimethyl-1,6-hexanediamine, 2,4,4-trimethyl-1,6-hexanediamine, hexanediamine, 1,2-diaminopropane, 1,3-diaminopentane, 2-methyl-1,5-diaminopentane, and 2-methyl-1,8-diaminooctane.

Examples of the branched alicyclic diamines having 6 to 16 carbon atoms include, for example,5-amino- 2,2,4-trimethyl-1-cyclopentane-methylamine, 5-amino-1,3,3-trimethylcyclohexanemethylamine. These diamines may be either of cis- or trans-isomers, or any mixture thereof.

Examples of the norbornandiamine include, for example, 2,5-norbornane dimethylamine, 2,6-norbornane dimethylamine, or any mixture thereof.

Further, the polymer which forms the soft segment may include, as a monomer unit, other diamine compound other than the above descrived compounds. Examples of the diamine compounds include, for example, an aliphatic diamine such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, or 3-methylpentane methylenediamine, an alicyclic diamine such as bis(4-aminocyclohexyl) methane, bis(4-aminocyclohexyl)propane, 1,3-bis(aminomethyl)cyclohexane, or 1,4- bis(aminomethyl)cyclohexane, and an aromatic diamine such as meta-xylenediamine, or para-xylylenediamine.

The above descrived diamines may be used singly or in combination with two or more kinds thereof.

### - Chain Extending Agent -

As described above, for the polyamide-based thermoplastic elastomer, a chain extending agent, such as a dicarboxylic acid may be used in addition to the hard segment and the soft segment. As the dicarboxylic acid, at least one kind selected from aliphatic, alicyclic, or aromatic dicarboxylic acids or any derivative thereof may be used.

Specific examples of the dicarboxylic acids include straight-chain aliphatic dicarboxylic acids of from 2 to 25 carbons, such as adipic acid, decanedicarboxylic acid, oxalic acid, succinic acid, glutaric acid, pimelic acid, suberic acid, azelaic acid, sebacic acid, and dodecanedioic acid; an aliphatic dicarboxylic acid, such as a dimerized aliphatic dicarboxylic acid having 14 to 48 carbon atoms that is obtained by dimerizing a saturated fatty acid obtained from the fractionation of a triglyceride or a hydrogen added product of the dimerized aliphatic dicarboxylic acid, an alicyclic dicarboxylic acid, such as 1,4-cyclohexane dicarboxylic acid, and an aromatic dicarboxylic acid, such as terephthalic acid or isophthalic acid.

### - Molecular Weight -

In the invention, the weight-average molecular weight of the polyamide-based thermoplastic elastomer included in the resin material is preferably from 10,000 to 300,000.

Due to the weight-average molecular weight of the polyamide-based thermoplastic elastomer being more than or equal to 10,000, increase in the stiffness of the resin material is enabled, resulting in improvement in the pressure resistance of a tire. In addition, due to the weight-average molecular weight of the polyamide-based thermoplastic elastomer being less than or equal to 300,000, excessive stiffness of the resin material is prevented, and a material that is easy to be injection-molded is obtained.

The weight-average molecular weight of the polyamide-based thermoplastic elastomer is more preferably from 10,000 to 200,000. The weight-average molecular weight of the polyamide-based thermoplastic elastomer can be measured by Gel Permeation Chromatography (GPC), and a GPC system such as "HLC-8320 GPC EcoSEC" from TOSOH CORPORATION is available.

The number average molecular weight of the polymer which forms the hard segment (polyamide) is preferably from 300 to 15,000 from the viewpoint of the melt molding property thereof. The number average molecular weight of the polymer which forms the soft segment is preferably from 200 to 6,000 from the viewpoint of the toughness and the low temperature flexibility thereof.

In the polyamide-based thermoplastic elastomer, the ratio (HS/SS) of the mass of the hard segment (HS) to that of the soft segment (SS) is preferably from 50/50 to 90/10, and more preferably from 50/50 to 80/20, from the viewpoint of moldability and rust preventability for a reinforcing metallic cord.

The content of the hard segment in the polyamide-based thermoplastic elastomer is preferably from 5 to 95 mass%, more preferably from 10 to 90 mass %, and particularly preferably from 15 to 90 mass % to the total amount of the polyamide-based thermoplastic elastomer.

The content of the soft segment in the polyamide-based thermoplastic elastomer is preferably from 10 to 95 mass %, more preferably from 10 to 90 mass %, and particularly preferably from 10 to 90 mass % to the total amount of the polyamide-based thermoplastic elastomer.

When the c hain extending agent is used, the content thereof is preferably set so that the molar number of the hydroxyl groups or the amino groups of the monomer which forms the soft segment is approximately equal to that of the carboxyl groups of the chain extending agent.

The polyamide-based thermoplastic elastomer can be synthesized by polymerizing, by using well-known methods, a polymer which forms the hard segment and a polymer which forms the soft segment. For instance, the polyamide-based thermoplastic elastomer can be obtained by polymerizing in a vessel a monomer which forms the hard segment (for example, an ω-aminocarboxylic acid such as 12-aminododecanoic acid and a lactam such as lauryl lactam), a monomer which forms the soft segment (for example, the ABA-type triblock polyether or the ABA-type triblock polyether diamine), and chain extending agent (for example, adipic acid or decanedicarboxylic acid). In particular, when an ω-aminocarboxylic acid is used as a monomer which forms the hard segment, the synthesis can be done by performing melt-polymerization at ambient pressure or melt-polymerization at ambient pressure followed by melt-polymerization at reduced pressure. When lactam is used as a monomer which forms the hard segment, the elastomer can be manufactured by a method of melt polymerization under a pressure from 0.1 to 5 MPa with the coexistence of an appropriate amount of water, followed by melt-polymerization at ambient pressure and/or melt-polymerization at reduced pressure. These synthetic reactions can be performed either in a batch method or in a continuous method. For the above-mentioned synthetic reactions, a batch type reaction tank, a single-tank type or multi-tank type continuous reaction device, a tube-shaped continuous reaction device, and so on may be used alone or in combination with each other, if appropriate.

In manufacturing the polyamide-based thermoplastic elastomer, polymerization temperature is preferably from 150 °C to 300°C, and more preferably from 160°C to 280°C. Polymerization time can be appropriately determined from the relation between the polymerization average molecular weight of a polyamide-based thermoplastic elastomer to be synthesized and the polymerization temperature thereof, and is preferably from 0.5 to 30 hours, and more preferably from 0.5 hours to 20 hours.

In manufacturing the polyamide-based thermoplastic elastomer, additives such as monoamines or diamines, for example, lauryl amine, stearylamine, hexamethylenediamine, meta-xylenediamine, and monocarboxylic acids or dicarboxylic acids, for example, acetic acid, benzoic acid, stearic acid, adipic acid, sebacic acid, and dodecanedioic acid may be added in order to adjust molecular weight and stabilize melt viscosity during mold processing, as needed. These additives can be selected in consideration of properties, such as molecular weight and viscosity, of a polyamide-based thermoplastic elastomer to be obtained so long as the additives do not adversely affect the advantageous effects of the invention.

In manufacturing the polyamide-based thermoplastic elastomer, catalysts can be used, as needed. Examples of the catalysts include a compound containing at least one kind selected from the group consisting of P, Ti, Ge, Zn, Fe, Sn, Mn, Co, Zr, V, Ir, La, Ce, Li, Ca, and Hf.

Examples of the catalysts include, for example, inorganic phosphoric compounds, organic titanium compounds, organic zirconium compounds, and organotin compounds.

Specifically, examples of the inorganic phosphoric compounds include a phosphorus acid such as phosphoric acid, pyrophosphoric acid, polyphosphoric acid, phosphorous acid, or hypophosphorous acid, an alkali metal salt of the phosphorus acid, and an alkaline earth metal salt of the phosphorus acid.

Examples of the organic titanium compounds include a titanium alkoxide [such as titanium tetrabutoxide, or titanium tetraisopropoxide].

Examples of the organic zirconium compounds include zirconium alkoxides [such as a zirconium tetrabutoxide (also referred to as "Zr(OBu)₄" or "Zr(OC₄H₈)₄")].

Examples of the organotin compounds include a distannoxane compound [such as 1-hydroxy -3-isothiocyanate-1,1,3,3-tetrabutyl distannoxane], tin acetate, dibutyl tin dilaurate, and butyltin hydroxide oxide hydrate.

The amount of the catalyst to be added and the timing of the addition are not particularly limited so long as these conditions can provide a target product rapidly.

As the polyamide-based thermoplastic elastomer, preferred combinations are, for example, a combination of a ring-opening polycondensate of lauryl lactam/polyethylene glycol/adipic acid, a combination of a ring-opening polycondensate of lauryl lactam/polypropylene glycol/adipic acid,a combination of a ring-opening polycondensate of lauryl lactam/polytetramethylene ether glycol/adipic acid, a combination of a ring-opening polycondensate of lauryl lactam/an ABA-type triblock polyether/adipic acid, a combination of a ring-opening polycondensate of lauryl lactam/an ABA-type triblock polyether diamine/decanedicarboxylic acid, a combination of a ring-opening polycondensate of lauryl lactam/polyethylene glycol/decanedicarboxylic acid, a combination of a ring-opening polycondensate of lauryl lactam/polypropylene glycol/decanedicarboxylic acid, a combination of a ring-opening polycondensate of lauryl lactam/polytetramethylene ether glycol/decanedicarboxylic acid, a combination of a ring-opening polycondensate of lauryl lactam/an ABA-type triblock polyether/decanedicarboxylic acid, a combination of a ring-opening polycondensate of lauryl lactam/an ABA-type triblock polyether diamine/decanedicarboxylic acid, a combination of a polycondensate of aminododecanoic acid/polyethylene glycol/adipic acid, a combination of a polycondensate of aminododecanoic acid/polypropylene glycol/adipic acid, a combination of a polycondensate of aminododecanoic acid/poly tetramethylene ether glycol/adipic acid, a combination of a polycondensate of aminododecanoic acid/an ABA-type triblock polyether/adipic acid, a combination of a polycondensate of aminododecanoic acid/an ABA-type triblock polyether diamine/adipic acid, a combination of a polycondensate of aminododecanoic acid/polyethylene glycol/decanedicarboxylic acid, a combination of a polycondensate of aminododecanoic acid/polypropylene glycol/decanedicarboxylic acid, a combination of a polycondensate of aminododecanoic acid/polytetramethylene ether glycol/decanedicarboxylic acid, a combination of a polycondensate of aminododecanoic acid/an ABA-type triblock polyether/decanedicarboxylic acid, and a combination of a polycondensate of aminododecanoic acid/an ABA-type triblock polyether diamine/decanedicarboxylic acid.

In addition, particularly preferred combinations are a combination of a ring-opening polycondensate of lauryl lactam/an ABA-type triblock polyether/adipic acid, a combination of a polycondensate of aminododecanoic acid/an ABA-type triblock polyether/adipic acid, a combination of a polycondensate of aminododecanoic acid/an ABA-type triblock polyether diamine/decanedicarboxylic acid, a combination of a polycondensate of aminododecanoic acid/polytetramethylene ether glycol/adipic acid, and a combination of a polycondensate of aminododecanoic acid/polytetramethylene ether glycol/decanedicarboxylic acid.

As the polyamide-based thermoplastic elastomer, a combination of preferred aspects can be used in which a combination, the constitutional ratio, the molecular weight, and so on of a structural unit have been described above.

The resin material may contain various additives such as rubber, various fillers (such as silica, calcium carbonate and cray), a rubber antioxidant, oil, a plasticizer, a colorant, a weathering stabilizer, and a reinforcing material. The additives have no particular limitation on the content thereof in the resin material (tire frame) and may be used, if appropriate, so long as the additives do not harm the advantageous effects of the invention. When a component such as the additive other than the resin material is added, the content of a resin component in the resin material is preferably 50 mass % or more, and more preferably 90 mass %or more with respect to the total amount. The content of the resin component in the resin material is a remaining part after subtracting the total content of the various additives from the total amount of the resin material.

### (Physical Properties of Resin Material)

Next, preferred physical properties of a resin material from which a tire frame is made will be described. The tire frame in the invention is formed by using the above-mentioned resin material.

The melting point (or softening point) of the resin material (tire frame) itself is usually from about 100°C to about 350°C, preferably from about 100°C to about 250°C, and from the viewpoint of the productivity of a tire, preferably from about 120°C to 250°C, and more preferably from 120°C to 200°C.

Thus, when the skeleton body of a tire is made, for example, by fusing the divided bodies (rame fragments), sufficient adhesion intensity between the tire skeleton pieces can be obtained by using a resin material having a melting point of from 120°C to 250°C, even if the body is formed by the fusion at an ambient temperature within a range from 120°C to 250°C. Accordingly, the tire of the invention is superior in durability during driving, such as blow-out resistance, or wear resistance. The heating temperature is preferably 10°C to 150°C higher than the melting point (or softening point) of the resin material from which the tire skeleton piece is made, and more preferably 10°C to 100°C higher.

The resin material can be obtained by adding thereto and , if appropriate, mixing various additives by well-known methods (for example melt mixing).

The resin material obtained by melt mixing can be used, as needed, in the form of a pellet.

The tensile yield strength of the resin material itself (tire frame) defined in JIS K7113:1995 is preferably 5 MPa or more, preferably from 5 MPa to 20 MPa, and more preferably from 5 MPa to 17 MPa. When the tensile yield strength of the resin material is 5 MPa or more, the tire can endure deformation due to a load thereon during driving.

The tensile yield elongation of the resin material itself (tire frame) defined in JIS K7113:1995 is preferably 10% or more, preferably from 10% to 70% and more preferably from 15% to 60%. When the tensile yield elongation of the resin material is 10% or more, the elastic region of the material can become large.

The tensile breaking elongation of the resin material itself (tire frame) defined in JIS K7113:1995 is preferably 50% or more, preferably 100% or more, more preferably 150% or more, and particularly preferably 200% or more. When the tensile breaking elongation of the resin material is 50% or more, the collisional destruction of the resin can be suppressed.

The load deflection temperature (under 0.45 MPa load) of the resin material itself (tire frame) defined in ISO75-2 or ASTM D648 is preferably 50°C or more, preferably from 50°C to 150°C, and more preferably from 50°C to 130°C. When the load deflection temperature of the resin material is 50°C or more, the deformation of the tire frame can be suppressed even if vulcanization is performed during manufacturing the tire.

A tire of the present embodiment will now be described according to the drawings.

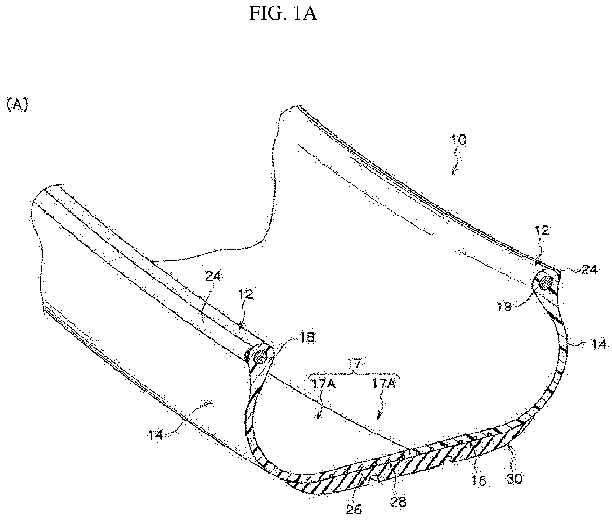

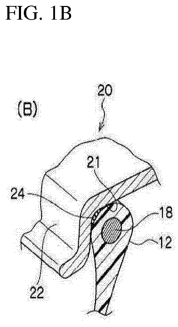

The description will be made for a tire 10 of the embodiment. FIG. 1A is a perspective view of the cross-section of a part of a tire according to one embodiment of the invention. FIG. 1B is a cross-sectional view of a bead partion fitted to a rim. As shown in FIG. 1A, the tire 10 according to the present embodiment has substantially the same cross-sectional shape as those of conventional general rubber pneumatic tires.

As shown in Fig. 1A, the tire 10 includes a tire case 17 composed of: a pair of bead portions 12 each contacting with a bead seat 21 and a rim flange 22 of a rim 20 shown in Fig. 1B; side portions 14 that extend from the bead portions 12 toward the outer side in the tire radial direction; and a crown portion 16 (outer peripheral portion) that connect the outer end in the tire radial direction of one side portion 14 and the outer end in the tire radial direction of the other side portion 14.

For the tire case 17 of the present embodiment, for example, a resin material in which respective additives are included in the polyamide-based thermoplastic elastomer including a soft segment and a hard segment including a soft segment and a hard segment including a structural unit represented by -[CO-(CH2)ₘ-NH]- (wherein m represents an integer of 6 to 10) in a molecule, can be used.

Although the tire case 17 according to the preesnt embodiment is formed of a single resin material, the invention is not limited to this configuration, and a thermoplastic resin materials having different characteristics may be used forrespective portions of the tire case 17 (such as the side portions 14, the crown portion 16, and the bead portions 12), similarly to conventional general rubber pneumatic tires. A reinforcing material (such as fiber, cord, unwoven fabric, and woven fabric which are formed of a polymer material or a metal) may be disposed to be embedded in the tire case 17 (such as in the bead portions 12, in the side portions 14, or in the crown portion 16) so as to reinforce the tire case 17 with the reinforcing material.

The tire case 17 according to the present embodiment is formed by bonding a pair of tire case half parts (tire frame pieces) 17A formed of a resin material to each other. The tire case half parts 17A is formed by placing circular tire case half parts 17A that have the same shape and that are obtained by molding one bead portion 12, one side portion 14, and a half-width of the crown portion 16 as an integral body by injection molding or the like, to face each other, and bonding the half parts to each other at the tire equatorial plane portion. The tire case 17 is not limited to that obtained by bonding two members, and may be formed by bonding three or more members.

The tire case half part 17A formed of a resin material can be molded by, for example, vacuum molding, pressure molding, injection molding, or melt casting. Accordingly, when compared with a conventional case in which the tire case is molded from rubber, it is not necessary to perform vulcanization, as a result of which the production process can remarkably be simplified, and the molding time can be saved.

In the present embodiment, the tire case half parts 17A have a symmetric shape, that is, one tire case half part 17A and the other tire case half part 17A have the same shape; therefore, there is an advantage in that the tire case half parts 17A can be molded using only one type of mold.

In the present embodiment, as shown in Fig. 1B, an annular bead core 18 formed of a steel cord is embedded in each bead portion 12, similarly to conventional general pneumatic tire. However, the invention is not limited to this configuration; the bead core 18 may be omitted as long as the rigidity of the bead portions 12 is ensured and there is no problem in fitting to the rim 20. Other than the steel cord, the bead core may be formed of an organic fiber cord, a resin-coated organic fiber cord, a hard resin, or the like.

In the present embodiment, an annular sealing layer 24 formed of a material having higher sealing properties than those of the resin material constituting the tire case 17, for example rubber, is provided on a part of the bead portion 12 that contacts the rim 20 or at least on a part of the bead portion 12 that contacts the rim flange 22 of the rim 20. The sealing layer 24 may also be provided in a part in which the tire case 17 (the bead portion 12) and the bead seat 21 contact each other. A material softer than the resin material that constitutes the tire case 17 may be used as the material having higher sealing properties than those of the resin material that constitutes the tire case 17. It is preferable to use, as a rubber usable for the sealing layer 24, the same kind of rubber as a rubber used on the outer surface of a bead portion of a conventional general rubber pneumatic tire. Further, oher thermoplastic resins (thermoplastic elastomers) having higher sealing properties than those of the resin material may be used. Examples of other thermoplastic resins include resins such as a polyurethane-based resin, a polyolefin-based resin, a polystyrene-based resin, and a polyester resin, and a blend of any of these resins with a rubber or an elastomer. Thermoplastic elastomers can also be used, and examples thereof include a polyester-based thermoplastic elastomer, a polyurethane-based thermoplastic elastomer, a polystyrene-based thermoplastic elastomer, and a polyolefin-based thermoplastic elastomer, and any combination of these elastomers and a blend of any of these elastomers with a rubber.

As shown in Fig. 1A, in the crown portion 16, a reinforcing metallic cord 26 having higher rigidity than that of the resin material constituting the tire case 17 is wound in the circumferential direction of the tire case 17. The reinforcing metallic cord 26 is helically wound to form a reinforcing metallic cord layer 28 in a state in which at least a part of the reinforcing metallic cord 26 is embedded in the crown portion 16 in a cross-sectional view taken along the axial direction of the tire case 17. A crown 30 formed of a material, such as rubber, having higher abrasion resistance than that of the resin material constituting the tire case 17 is disposed on the outer circumference side in the tire radial direction of the reinforcing metallic cord layer 28.

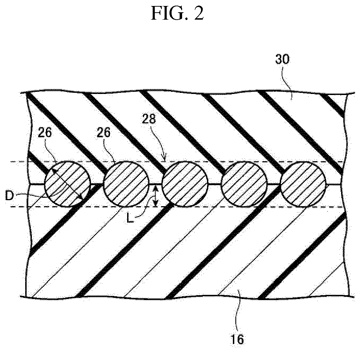

The reinforcing metallic cord layer 28 formed by the reinforcing metallic cord 26 will be described below with reference to Fig. 2. Fig. 2 is a cross-sectional view taken along the tire rotation axis, which illustrates a state in which the reinforcing cord is embedded in the crown portion of the tire case of the tire according to presednt embodiment. As shown in Fig. 2, the reinforcing metallic cord 26 is helically wound in a state in which at least a part of the reinforcing metallic cord 26 is embedded in the crown portion 16 in a cross-sectional view taken along the axial direction of the tire case 17, and, together with a part of the outer circumferential portion of the tire case 17, forms the reinforcing metallic cord layer 28 specified by the dotted lines in Fig. 2. The part of the reinforcing cord 26 that is embedded in the crown portion 16 is in close contact with the resin material constituting the crown portion 16 (the tire case 17). A monofilament (single filament) of a metal fiber, an organic fiber, or the like, or a multifilament (stranded filament) in which fibers are stranded, such as a steel cord composed of steel fibers, may be used as the reinforcing metallic cord 26. In the present embodiment, a steel cord is used as the reinforcing metallic cord 26.

The embedding depth L in Fig. 2 represents the depth of embedding of the reinforcing metallic cord 26 in the tire case 17 (the crown portion 16) in the tire rotation axis direction. The depth of embedding L of the reinforcing metallic cord 26 in the crown portion 16 is preferably equal to or greater than 1/5 of the diameter D of the reinforcing metallic cord 26, and more preferably more than 1/2 of the diameter D of the reinforcing metallic cord 26. It is most preferable that the entire reinforcing metallic cord 26 be embedded in the crown portion 16. When the depth of embedding L of the reinforcing metallic cord 26 is more than 1/2 of the diameter D of the reinforcing metallic cord 26, the reinforcing metallic cord 26 is difficult to drop off from the embedded portion due to the dimensions of the reinforcing metallic cord 26. When the reinforcing metallic cord 26 is entirely embedded in the crown portion 16, the surface (the outer circumferential surface) becomes flat, whereby entry of air into an area around the reinforcing cord can be suppressed even when a member is placed on the crown portion 16 in which the reinforcing metallic cord 26 is embedded. The reinforcing metallic cord layer 28 corresponds to a belt disposed on the outer circumferential surface of a carcass of a conventional rubber pneumatic tire.

As described above, the crown 30 is disposed on the outer circumferential side in the tire radial direction of the reinforcing metallic cord layer 28. It is preferable that the same kind of rubber as that used for conventional rubber pneumatic tires is used as the rubber used for the crown 30. It is also possible to use, instead of the crown 30, a crown formed of another kind of resin material which has higher abrasion resistance than that of the resin material constituting the tire case 17. In the crown 30, a crown pattern composed of plural grooves is formed on the contact surface that comes into contact with a road surface, similarly to conventional rubber pneumatic tires.

A method of producing a tire of the present embodiment will be described below.

### (Tire Case Forming Step)

First, tire case half parts are formed by using the resin material containing the polyamide-based thermoplastic elastomer as described above. The forming of these tire cases is preferably performed by injection-molding. Then, tire case half parts supported by thin metal support rings are arranged to face each other. Subsequently, a mold for bonding, which is not shown in the drawings, is placed so as to contact the outer circumferential surface of a portion at which the tire case half parts are contacted with each other. Here, the mold for bonding is configured to pressurize a region at or around the bonding section (the contact portion) of the tire case half parts 17A with a predetermined pressure. Then, the region at or around the bonding section of the tire case half parts is pressurized at a temperature equal to or higher than the melting point (or softening point) of the resin material that constitutes the tire case. When the bonding section of the tire case half parts is heated and pressurized by the mold for bonding, the bonding section is melted, and the tire case half parts are fused with each other, as a result of which the members are integrated to form the tire case 17. Although the bonding section of the tire case half parts is heated using the mold for bonding in the present embodiment, the invention is not limited to this configuration; heating of the bonding section may be carried out using, for example, a separately-provided high-frequency heater, or the tire case half parts may be bonded by softening or melting the bonding section, in advance, via application of hot air, irradiation of infrared rays or the like, and pressurizing the bonding section using the mold for bonding.

### (Reinforcing Mettalic Cord Member Winding Step)

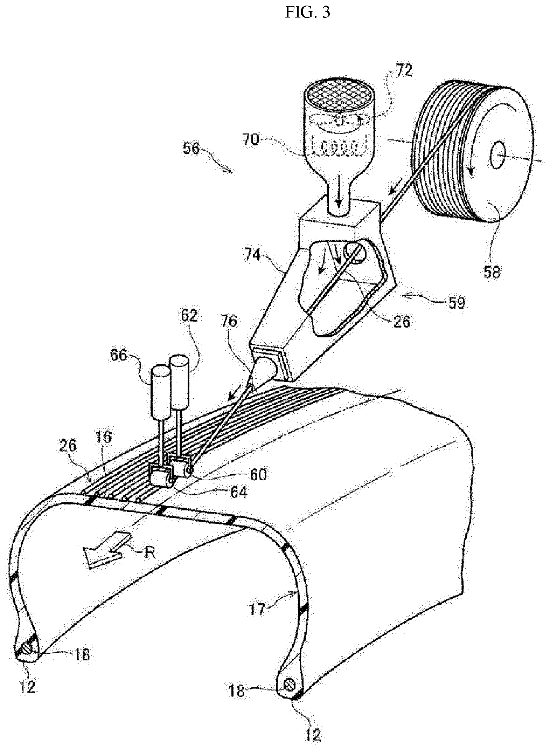

Next, a reinforcing cord winding step will be described below using Fig. 3. Fig. 3 is an explanatory diagram explaining an operation of embedding the reinforcing cord in the crown portion of the tire case using a cord heating device and rollers. In Fig. 3, a cord feeding apparatus 56 includes a reel 58 on which a reinforcing metallic cord 26 is wound, a cord heating device 59 disposed at the downstream side in the cord feeding direction of the reel 58, a first roller 60 disposed at the downstream side in the reinforcing metallic cord 26 feeding direction, a first cylinder unit 62 for moving the first roller 60 in directions in which the first roller comes into contact with and get away from the outer circumferential surface of the tire, a second roller 64 disposed at the downstream side in the reinforcing metallic cord 26 feeding direction of the first roller 60, and a second cylinder unit 66 for moving the second roller 64 in directions in which the first roller comes into contact with and get away from the outer circumferential surface of the tire. The second roller 64 can be used as a cooling roller formed of metal. In the present embodiment, the surface of the first roller 60 or the second roller 64 is coated with a fluororesin (TEFLON (registered trademark) in the case of the present embodiment) with a view to suppressing adhesion of the melted or softened resin matereial. Although the cord feeding apparatus 56 is configured to have two rollers of the first roller 60 and the second roller 64 in the present embodiment, the invention is not limited to this configuration, and the cord feeding apparatus may be configured to have only one of these rollers (that is, a single roller).

The cord heating device 59 includes a heater 70 and a fan 72 that generate hot air. The cord heating device 59 includes a heating box 74 into which hot air is supplied and in which the reinforcing metallic cord 26 passes through the inside space thereof, and an discharge port 76 through which the heated reinforcing metallic cord 26 is discharged.

In this step, first, the temperature of the heater 70 of the cord heating device 59 is increased, and the air around the heater 70 heated by the heater 70 is sent to the heating box 74 by an air current generated by the rotation of the fan 72. Then, the reinforcing cord 26 drawn out from the reel 58 is fed to the inside of the heating box 74 of which the inner space is heated with hot air, whereby the reinforcing cord 25 is heated (for example, to increase the temperature of the reinforcing metallic cord 26 to be about 100°C to about 200°C). The heated reinforcing metallic cord 26 passes through the discharge port 76, and is helically wound, with a constant tension, around the outer circumferential surface of the crown portion 16 of the tire case 17 rotating in the direction of arrow R in Fig. 3. Here, as a result of the heated reinforcing metallic cord 26 coming into contact with the outer circumferential surface of the crown portion 16, the resin material at the contact portion is melted or softened, and at least a part of the heated reinforcing metallic cord 26 is embedded in the outer circumferential surface of the crown portion 16. In this process, since the heated reinforcing metallic cord 26 is embedded in the melted or softened resin material, the resin material and the reinforcing metallic cord 26 get into a state in which no space is left between the resin material and the reinforcing cord 26, that is, in a tightly-contacted state. By heating the reinforcing metallic cord 26 to a temperature higher than the melting point of the resin material of the tire case 17, the melting or softening of the resin material in the portion contacting the reinforcing metallic cord 26 is promoted. By employing this configuration, embedding of the reinforcing metallic cord 26 in the outer circumferential surface of the crown portion 16 is facilitated.

The depth L of embedding of the reinforcing metalli cord 26 can be adjusted by the heating temperature for the reinforcing metalli cord 26, the tension applied to the reinforcing metalli cord 26, the pressure applied from the first roller 60, etc. In the present embodiment, the depth L of embedding of the reinforcing metalli cord 26 is set to be equal to or greater than 1/5 of the diameter D of the reinforcing metalli cord 26. The depth L of embedding of the reinforcing metalli cord 26 is more preferably more than 1/2 of the diameter D, and it is still more preferable that the entire reinforcing metalli cord 26 is embedded.

In this way, a reinforcing cord layer 28 is formed on the outer circumference side of the crown portion 16 of the tire case 17 by winding the heated reinforcing metallic cord 26 on the outer circumferential surface of the crown portion 16 such that the heated reinforcing metallic cord 26 is embedded in the outer circumferential surface of the crown portion 16.

A belt-shaped vulcanized crown 30 is wound on the outer circumferential surface of the tire case 17 for one revolution, and the crown 30 is bonded to the outer circumferential surface of the tire case 17 using, for example, an adhesive. For example, precured crowns known thus far for use in retreaded tires may be used as the crown 30. This step is a step similar to a step of bonding a precured crown to the outer circumferential surface of a casing of a retreaded tire.

A tire 10 can be completed by bonding a sealing layer 24 formed of a vulcanized rubber to the bead portion 12 of the tire case 17 using, for example, an adhesive.

### (Effects)

The tire 10 according to the presnt embodiment has excellent pressure resistance, since the tire case 17 is formed of a resin material which includes a polyamide-based thermoplastic elastomer including a soft segment and a hard segment including a structural unit represented by -[CO-(CH₂)ₘ-NH]- (wherein m represents an integer from 6 to 10) in a molecule. In addition, since the tire 10 has a structure that is simpler than those of conventional rubber tires, the weight thereof is small. Therefore, the tire 10 according to the present embodiment has excellent abrasion resistance and durability. Further, excellent productivity is exhibited since the tire case 17 can be injection-molded.

In the tire 10 according to the present embodiment, on the outer circumferential surface of the crown portion 16 of the tire case 17 formed of a resin material, the reinforcing mettalic cord 26 having higher rigidity than that of the resin material is helically wound in the circumferential direction, as a result of which puncture resistance, cutting resistance, and rigidity in the circumferential direction of the tire 10 are improved. The improved rigidity in the circumferential direction of the tire 10 prevents creeping of the tire case 17 formed of a resin material.

In a cross-sectional view taken along the axial direction of the tire case 17 (the cross-section shown in Fig. 1), at least a part of the reinforcing metallic cord 26 is embedded in the outer circumferential surface of the crown portion 16 of the tire case 17 formed of the resin material, and is in close contact with the resin material, as a result of which movement of the reinforcing metallic cord 26 due to, for example, a force applied at the time of traveling is suppressed. Accordingly, occurrence of rust on the reinforcing metallic cord 26 is suppressed, and separation between the reinforcing metallic cord 26, the tire case 17, and the crown 30 is suppressed, whereby the durability of the tire 10 is improved.

In a case in which the reinforcing metallic cord layer 28 is configured to include the resin material as described above, the reinforcing metallic cord 26 can be made to more tightly contact the tire case 17 and fixed to the tire case 17 since the difference in hardness between the tire case 17 and the reinforcing metallic cord layer 28 can be made smaller than that in a case in which the reinforcing metallic cord 26 is fixed using a cushion rubber. Accordingly, the incorporation of air mentioned above can effectively be prevented, and the movement of the reinforcing cord member at the time of traveling can effectively be suppressed.

In a case in which the reinforcing metallic cord 26 is a steel cord, the reinforcing metallic cord 26 can easily be separated from the resin material by heating and recovered at the time of disposing of the tire, and, therefore, there is an advantage from the viewpoint of recyclability of the tire 10. Further, since the resin material has a lower loss factor (tan δ) compared with vulcanized rubbers, inclusion of a large amount of resin material in the reinforcing metallic cord layer 28 makes it possible to enhance the rolling properties of the tire. Compared with vulcanized rubbers, the resin material has advantages in terms of high in-plane shear stiffness, excellent steering stability at the time of traveling with the tire, and excellent abrasion resistance.

Since the crown 30 that contacts a road surface is formed of a rubber material having higher abrasion resistance than that of the polyamide-based thermoplastic elastomer, the abrasion resistance of the tire 10 is improved.

Since the annular bead core 18 formed of a metal material is embedded in the bead portion 12, the tire case 17 is strongly fixed to the rim 20, i.e., the tire 10 is strongly fixed to the rim 20, similarly to conventional rubber pneumatic tires.

Since the sealing layer 24 formed of a rubber material having higher sealing ability than the resin material constituing the tire case 17 is disposed in a region of the bead portion 12 that contacts the rim 20, sealing between the tire 10 and the rim 20 can be further improved.

Although a configuration in which the reinforcing metallic cord 26 is heated such that a portion of the surface of the tire case 17 that contacts the heated reinforcing metallic cord 26 is melted or softened is adopted in the embodiment described above, the invention is not limited to this configuration; a hot air generating device may be used, instead of heating the reinforcing metallic cord 26, to heat the outer circumferential surface of the crown portion 16 in which the reinforcing cord 26 is to be embedded, and the reinforcing metallic cord 26 may thereafter be embedded in the crown portion 16.

Although the heat source of the cord heating device 59 includes the heater and the fan in the present embodiment, the invention is not limited to this configuration, and a configuration in which the reinforcing metallic cord 26 is directly heated by radiation heat (for example, infrared rays) may be adopted.

Still further, although a configuration in which a region at which the resin material with the reinforcing metallic cord 26 embedded therein is melted or softened is forcibly cooled with the second roller 64 formed of metal is adopted in the present embodiment, the invention is not limited to this configuration; a configuration in which cold air is directly applied to the region at which the thermoplastic resin material is melted or softened, to forcibly cool and solidify the region at which the resin material is melted or softened may also be adopted.

Still further, a configuration in which the reinforcing metallic cord 26 is heated is adopted in the present embodiment, a configuration in which the outer circumference of the reinforcing metallic cord 26 is coated with the same resin material as that of the tire case 17 may be adopted.

Helically winding the reinforcing metallic cord 26 is easy from the viewpoint of production. However, a method in which the reinforcing metallic cord 26 is discontinuous in the width direction, for example, may also be contemplated.

Although the tire 10 according to the present embodiment is a so-called tubeless tire in which an air chamber is formed between the tire 10 and the rim 20 by fitting the bead portion 12 to the rim 20. However, the invention is not limited to this configuration, and a complete tube shape may be adopted. The tire according to the invention may be an embodiment which uses a reinforcing metallic cord member including a cord member covered by resin material, as shown in a second embodiment (FIGs. 4 and 5) of JP-A No. 2012-46030.

Although modes for carrying out the invention are described above with reference to embodiments, the embodiments are merely examples, and may be practiced with various modifications within a range that does not depart from the gist of the inention. Of course, the protection scope of the invention is not limited to these embodiments.

### EXAMPLES

The invention will now be described more specifically by using examples. However, the invention is not limited these examples.

### <Synthesis of Polyamide-based Thermoplastic Elastomer>

### - Synthesis of Polyamide-based Thermoplastic Elastomer TPA 1-

In a 50-litter pressure vessel equipped with a stirrer, a thermometer, a torque meter, a pressure meter, an inlet for nitrogen gas, a pressure controlling device, and an outlet for polymer were added 11.3 kg of 5-aminovaleric acid, 5.58 kg of an ABA-type triblock polyether diamine (trade name "XTJ-542", Huntsman Corporation), and 1.11 kg of adipic acid.

Then, after the inside of the pressure vessel was sufficiently nitrogen-purged, the pressure in the pressure vessel was adjusted to 0.05 MPa, and the temperature therein was raised from room temperature to 240° C while nitrogen gas was supplied. Two hours of polymerization was done at 240° C with the pressure in the pressure vessel adjusted to 0.05 MPa.

Then, after the flow rate of nitrogen gas was slowed down, the inside of the vessel was vacuumized by the vacuum pump, followed by 8 hours of polymerization at 260° C to obtain a polyamide-based thermoplastic elastomer TPA 2.

The polyamide-based thermoplastic elastomer TPA 1 is Polyamide 5 (NYLON 5; N 5) in which a polymer forming a hard segment include a structural unit represented by -[CO-(CH₂)₄-NH]-. Note that NYLON is a trademark.

### - Synthesis of Polyamide-based Thermoplastic elastomer TPA 2 -

Polyamide-based thermoplastic elastomer TPA 2 was obtained in the same manner except that 6-aminohexanoic acid was used instead of 5-aminovaleric acid in the synthesis of the polyamide-based thermoplastic elastomer TPA 1.

The polyamide-based thermoplastic elastomer TPA 2 is Polyamide 6 (NYLON 6; N 6) in which a polymer forming a hard segment include a structural unit represented by -[CO-(CH₂)₅-NH]-. Note that NYLON is a trademark.

### - Synthesis of Polyamide-based Thermoplastic Elastomer TPA 3 -

Polyamide-based thermoplastic elastomer TPA 3 was obtained in the same manner except that omega-aminooctanoic acid was used instead of 5-aminovaleric acid in the synthesis of the polyamide-based thermoplastic elastomer TPA 1.

The polyamide-based thermoplastic elastomer TPA 3 is Polyamide 8 (NYLON 8; N 8) in which a polymer forming a hard segment include a structural unit represented by -[CO-(CH₂)₇-NH]-. Note that NYLON is a trademark.

### - Synthesis of Polyamide-based Thermoplastic Elastomer TPA 4 -

Polyamide-based thermoplastic elastomer TPA 4 was obtained in the same manner except that 11-aminoundecanoic acid was used instead of 5-aminovaleric acid in the synthesis of the polyamide-based thermoplastic elastomer TPA 1.

The polyamide-based thermoplastic elastomer TPA 4 is Polyamide 11 (NYLON 11; N 11) in which a polymer forming a hard segment include a structural unit represented by - [CO-(CH₂)₁₀-NH]-. Note that NYLON is a trademark.

### - Synthesis of Polyamide-based Thermoplastic Elastomer TPA 5 -

Polyamide-based thermoplastic elastomer TPA 5 was obtained in the same manner except that 12-aminododecanoic acid was used instead of 5-aminovaleric acid in the synthesis of the polyamide-based thermoplastic elastomer TPA 1.

The polyamide-based thermoplastic elastomer TPA 5 is Polyamide 12 (NYLON 12; N 12) in which a polymer forming a hard segment include a structural unit represented by - [CO-(CH₂)₁₁-NH]-. Note that NYLON is a trademark.

### - Synthesis of Polyamide-based Thermoplastic Elastomer TPA 6 -

In a 50-litter pressure vessel equipped with a stirrer, a thermometer, a torque meter, a pressure meter, an inlet for nitrogen gas, a pressure controlling device, and an outlet for polymer were added 7.72 kg of 5-aminovaleric acid, 6.3 kg of an ABA-type triblock polyether diamine (trade name "XTJ-542", Huntsman Corporation), and 1.45 kg of adipic acid.

Then, after the inside of the pressure vessel was sufficiently nitrogen-purged, the pressure in the pressure vessel was adjusted to 0.05 MPa, and the temperature therein was raised from room temperature to 240°C while nitrogen gas was supplied. Two hours of polymerization was done at 240° C under the pressure in the pressure vessel adjusted to 0.05 MPa.

Then, after the flow rate of nitrogen gas was slowed down, the inside of the vessel was vacuumized by the vacuum pump followed by 8 hours of polymerization at 260° C to obtain a polyamide-based thermoplastic elastomer TPA 6.

The polyamide-based thermoplastic elastomer TPA 6 is Polyamide 5 (NYLON 5; N 5) in which a polymer forming a hard segment include a structural unit represented by -[CO-(CH₂)₄-NH]-. Note that NYLON is a trademark.

### - Synthesis of Polyamide-based Thermoplastic Elastomer TPA 7 -

Polyamide-based thermoplastic elastomer TPA 7 was obtained in the same manner except that 6-aminohexanoic acid was used instead of 5-aminovaleric acid in the synthesis of the polyamide-based thermoplastic elastomer TPA 6.

The polyamide-based thermoplastic elastomer TPA 7 is Polyamide 6 (NYLON 6; N 6) in which a polymer forming a hard segment include a structural unit represented by -[CO-(CH₂)₅-NH]-. Note that NYLON is a trademark.

### - Synthesis of Polyamide-based Thermoplastic Elastomer TPA 8 -

Polyamide-based thermoplastic elastomer TPA 8 was obtained in the same manner except that omega-aminooctanoic acid was used instead of 5-aminovaleric acid in the synthesis of the polyamide-based thermoplastic elastomer TPA 6.

The polyamide-based thermoplastic elastomer TPA 8 is Polyamide 8 (NYLON 8; N 8) in which a polymer forming a hard segment include a structural unit represented by -[CO-(CH2)7-NH]-. Note that NYLON is a trademark.

### - Synthesis of Polyamide-based Thermoplastic Elastomer TPA 9 -

Polyamide-based thermoplastic elastomer TPA 9 was obtained in the same manner except that 11-aminoundecanoic acid was used instead of 5-aminovaleric acid in the synthesis of the polyamide-based thermoplastic elastomer TPA 6.

The polyamide-based thermoplastic elastomer TPA 9 is Polyamide 11 (NYLON 11; N 11) in which a polymer forming a hard segment include a structural unit represented by - [CO-(CH₂)₁₀-NH]-. Note that NYLON is a trademark.

### - Synthesis of Polyamide-based Thermoplastic Elastomer TPA 10 -

Polyamide-based thermoplastic elastomer TPA 10 was obtained in the same manner except that 12-aminododecanoic acid was used instead of 5-aminovaleric acid in the synthesis of the polyamide-based thermoplastic elastomer TPA 6.

The polyamide-based thermoplastic elastomer TPA 10 is Polyamide 12 (NYLON 12; N 12) in which a polymer forming a hard segment include a structural unit represented by -[CO-(CH₂)₁₁-NH]-. Note that NYLON is a trademark.

### <Tire fabrication>

### [Examples 1 to 6 and Comparative Examples 1 to 4]

According to above-mentioned embodiment, the elastomers TPA 1 to TPA 10 described in the column "polymer type" in the Table 1 were injection-molded to fabricate tires of Examples or Comparative Examples including steel cord (SC cord).

### [Evaluation of Rust Suppression of SC cord]

The tire fabricated in each of the Examples and the Comparative Examples was placed in a thermohygrostat bath at 50°C and 90%RH and left at rest for a month, and then the condition of the SC cords was observed. Occurrence of rust on the SC cord was evaluated based on the following characterization criteria. The occurrence of rust on the SC cord causes deterioration of the strength of the SC cord. Results are described in Table 1.

### - Characterization Criteria -

A: No occurrence of rust on the SC cord was observed.
B: Occurrence of rust on the SC cord was observed.
Examples 3 and 6 are included by way of reference.

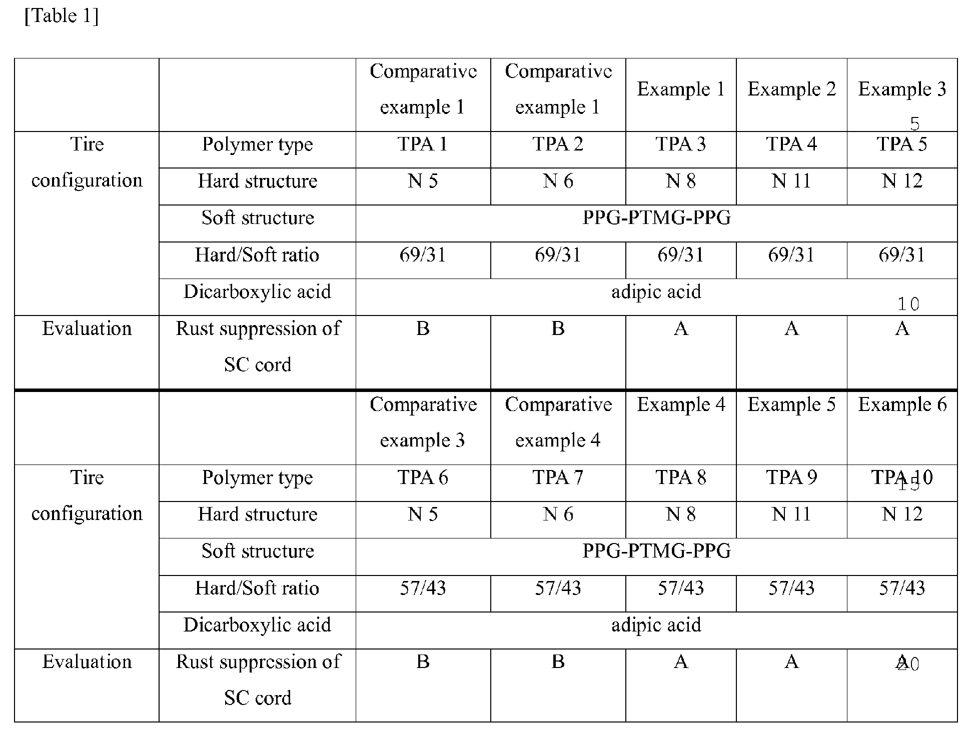

In Table 1, the "Hard structure" row represents polymer types forming the hard segments of the elastomers of TPA 1 to TPA 10. The "soft structure" row represents that polymer types forming the soft segments of TPA 1 to TPA 10 are PPG/PTMG/PPG.

Amount ratios in the "hard/soft ratio" row in Table 1 represent ratios of the mass of the hard segment (hard) to the mass of the soft segment (soft) of TPA 1 to TPA 10.

Components described in the "dicarboxylic acid" row in Table 1 represent a component of a chain extending agent which is a coupling part of the hard segment and the soft segment.

The results described in Table 1 show that the Comparative Examples in which the polyamide-based thermoplastic elastomer in the tire has a hard segment including a structural unit represented by -[CO-(CH2)m-NH]- in which m is outside of a range from 7 to 11 are inferior to the Examples in rust preventability for the steel cord embedded in the tire.

## Claims

1. A tire comprising:
a circular tire frame formed of a resin material; and
a reinforcing metallic cord member wound around an outer circumferential portion of the tire frame,
wherein the resin material comprises a polyamide-based thermoplastic elastomer including a soft segment and a hard segment including a structural unit represented by -[CO-(CH₂)ₘ-NH]- (wherein m represents an integer of 6 to 10) in a molecule.

2. The tire according to claim 1, wherein a ratio (HS/SS) of a mass of the hard segment (HS) to a mass of the soft segment (SS) of the polyamide-based thermoplastic elastomer is from 50/50 to 90/10.

3. The tire according to claim 1 or 2, wherein the soft segment is a copolymer comprising a structural unit derived from tetramethylene ether glycol.

## Patentansprüche

1. Reifen umfassend:
einen ringförmigen Reifenrahmen, der aus einem Harzmaterial gebildet ist; und
ein verstärkendes metallisches Cordelement, das um einen äußeren Umfangsteil des Reifenrahmens gewunden ist;
wobei das Harzmaterial ein thermoplastisches Elastomer auf der Basis von Polyamid umfasst, das ein Weichsegment und ein Hartsegment umfasst, das eine strukturellen Einheit, die durch -[CO-(CH₂)ₘ-NH]- dargestellt ist (wobei m eine ganze Zahl von 6 bis 10 darstellt) in einem Molekül umfasst.

2. Reifen nach Anspruch 1, wobei ein Verhältnis (HS/WS) einer Masse des Hartsegments (HS) zu einer Masse des Weichsegments (WS) des thermoplastischen Polymeren auf der Basis von Polyamid 50/50 bis 90/10 beträgt.

3. Reifen nach Anspruch 1 oder 2, wobei das Weichsegment ein Copolymer ist, das eine strukturelle Einheit umfasst, die von Tetramethylenetherglycol abgeleitet ist.

## Revendications

1. Pneumatique comprenant:
une carcasse circulaire de pneumatique formée d'un matériau de résine; et
un élément de corde métallique de renfort enroulé autour d'une partie circonférentielle externe de la carcasse de pneumatique,
le matériau de résine comprenant un élastomère thermoplastique à base de polyamide comprenant un segment mou et un segment dur comprenant un motif structurel représenté par -[CO-(CH₂)ₘ-NH- (où m représente un nombre entier d'une valeur de 6 à 10) dans une molécule.

2. Pneumatique selon la revendication 1, dans lequel un rapport (HS/SS) d'une masse du segment dur (HS) à une masse du segment mou (SS) de l'élastomère thermoplastique à base de polyamide est de 50/50 à 90/10.

3. Pneumatique selon la revendication 1 ou 2, dans lequel le segment mou est un copolymère comprenant un motif structurel dérivé du tétra méthylène éther glycol.
